**Europäisches Patentamt**

**European Patent Office**

**Office européen des brevets**

(19)

(11) Publication number: **0 007 891**
**B1**

(12) # EUROPEAN PATENT SPECIFICATION

(45) Date of publication of patent specification: **15.12.82**

(51) Int. Cl.³: **E 02 B 15/04**

(21) Application number: **79850066.6**

(22) Date of filing: **06.07.79**

(54) Method and plant for collecting of oil floating on water.

(30) Priority: **27.07.78 SE 7808179**

(43) Date of publication of application:
**06.02.80 Bulletin 80/3**

(45) Publication of the grant of the patent:
**15.12.82 Bulletin 82/50**

(84) Designated Contracting States:
**AT BE DE FR GB IT NL**

(56) References cited:
CH - A - 42 564 7
FR - A - 12 327 39
US - A - 35 348 59
US - A - 37 264 06
US - A - 40 678 11

(73) Proprietor: **Garin, Gert**
**Kulladalsgatan 12A**
**S-214 64 Malmö (SE)**

(73) Proprietor: **Winbladh, Per**
**Dalgardsvägen 4**
**S-240 20 Furulunds Station (SE)**

(72) Inventor: **Garin, Gert**
**Kulladalsgatan 12A**
**S-214 64 Malmö (SE)**
Inventor: **Winbladh, Per**
**Dalgardsvägen 4**
**S-240 20 Furulunds Station (SE)**

(74) Representative: **Holmqvist, Lars J.H. et al,**
**Lars Holmqvist Patentbyra AB Box 4289**
**S-203 14 Malmö 4 (SE)**

Courier Press, Leamington Spa, England.

Method and plant for collecting of oil floating on water

The present invention relates to a method and a plant for recovery of oil, spilled on a water surface.

In the event of a collision with or grounding of a tanker or an accident at an off-shore oil well the oil as a rule is spilled on the water surface. The tankers of to-day being enormous, the damage of an oil spill would be devastating to beaches as well as to bird-life and fishing.

If a really big accident occurs, gathering and recovery of the oil spill is beyond the capacity of to-day's technique. There is a certain readiness for minor accidents and spills but major accidents demand a technique yet unknown.

Oil spills on water have thus far often been fought by chemical means, in order to sink the oil into the sea and make it harmless. At a large cost the ocean will be free from oil slicks but instead the vegetation at the bottom is given a large addition of nutriment. This causes large changes in the ecological system.

In the event of major accidents, oil is spilled in large quantities representing a great economic value.

By mechanical recovery of oil spill to-day booms are used to corral the oil slick and gather the oil to a layer of a thickness enough to enable mechanical collection from the water surface. The collection is performed either by suction or by means of skimmers.

UK patent specification No. 947 026 discloses a skimmer. This plant operates satisfactory but has too low efficiency to be usable at big oil spills.

One of the problems which must be solved at collecting of oil on a water surface is the fact that the oil is spread into a thin surface layer over a large area. In order to efficiently collect the oil, it is required that the oil layer is thickened. This is customary performed by means of oil booms arranged in the form of a V. The oil corralled by the booms is gathered at the apex of the V and thereby making the oil layer thicker.

The collected mixture of oil and water is pumped by pumping means from the water surface to a separation vessel where the oil is settled or separated from the water. The water is given off to the surroundings.

US—A—3,534,859 discloses an apparatus for collecting oil floating on water. The apparatus comprises an inner flotation member which causes the apparatus to float in the water with the uppermost portion of the flotation member at the vicinity of the interface between the water and the oil floating on the water. The flotation member comprises a collection vessel extending downwardly therefrom and a means for transporting the mixture of water and oil flowing over the flotation member into the vessel away from the apparatus. An outer member surrounds or substantially surrounds the flotation member and is attached thereto.

US—A—4,067,811 discloses an apparatus for separating oil from water by imparting a whirlpool motion in order to thicken the oil layer and passing the oil through a nozzle to a separator comprising settle tanks.

The previously known devices are sensible to wave motion and can only operate efficiently in calm weather. However, the device of US—A—3534859 may be provided with a surrounding fin which serves to break waves and create a region of relatively calm water.

Swedish patent specification No. 7309585-3 (laid-open publication No. 401 941) discloses a device for collecting oil comprising a primary dam plant having several dam hatches supported by a separate dam hatch floater in order to form dam openings which are placed adjacent to the boundary between the oil and the water. The oil on the water, preferably gathered by booms enters the primary dam plant through the dam openings and is settled in the dam. The dam is entirely surrounded by a flexible sheet material so that the dam adapts itself to the wave motions. The flexible bottom of the dam comprises openings for the outlet of separated water. The flexible sheet material forms edges of the dam which extend essentially above the wave surface to prevent water from entering the dam but through the dam openings. Nor can this plant prevent the waves from disturbing the separation of the oil from the water in the dam.

The object of the present invention is to provide a method and a plant for recovering oil spilled on water and thus reducing the damages of oil catastrophes at sea. The recovery is carried out by mechanical means thus enabling the reuse of the collected oil and preventing unnecessary spreading of chemicals.

When the oil reaches a beach it is known that the oil is gathered in a calm bay and can reach a considerable thickness at this place. A calm bay is characterized by the fact that it is surrounded by land on at least three sides and the fourth side is open to the sea. Moreover, the bay is relatively shoal and its bottom slowly inclines. These conditions are reproduced in the present invention in order to gather the oil to a bigger thickness.

According to the invention a method is provided for recovering oil spilled on water, comprising the steps of floating a closed container of a submersible or semi-submersible type comprising an upper surface surrounded by a height adjustable edge with said edge positioned adjacent to the boundary between oil and water, causing a mixture of oil and water floating over said edge to flow through at least one hole in the upper surface of the container to the interior of the container located below the water surface; allowing the mixture to settle i.e.

separating the oil from the water in the container below the surrounding water surface and discharging the separated water to the surroundings; and forming a calm bay above and in the vicinity of or around the container by means of said upper surface and a rigid collar attached to and partially surrounding the container and extending above the water surface. Thereafter the separated oil is discharged to a tanker or similar. Preferably the mixture in the container and the upper surface are heated in order to lower the viscosity of the oil and the mixture can separate more easily. The depth and inclination or tilt of the container can be adjusted by means of trim tanks and compensation tanks so as to tilt the container against the waves of the sea and the vertical height of the edge can be adjusted in relation to the container.

The container is of a submersible or semi-submersible type which means that the container will not be affected by weather or wind to any appreciable degree, such that the separation can take place almost undisturbedly. Moreover, unnecessary pumping of the oil is avoided to a separate settling tank, since the oil flows into the interior of the container by gravity.

The formation of a calm bay makes it possible to achieve a pre-separation and a gathering already before the oil enters the container.

According to the invention there is also provided a plant for recovering oil spilled on water, comprising a closed container having an upper surface and a lower surface and side walls. The container is immersed in the sea and encloses a mixture of oil and water and eventually a certain amount of air. The container comprises ballast tanks, compensation tanks and trim tanks and a control equipment for adjusting the depth and inclination of the container in the water, and means for positioning a height adjustable edge of the container adjacent to the boundary between the oil and the water. The upper surface of the container is provided with at least one hole enabling a mixture of oil and water floating over said edge to enter and settle in the interior of the container below the surrounding water surface. An outlet of the container is adapted to discharge the separated water to the surroundings. Moreover, the container comprises a rigid collar extending above the water surface on the outside and at a distance from said edge in order to partially encircle an area of the water surface and to form a calm bay together with the upper surface of the container. Having an area with a limited depth, a calm bay results. The upper surface of the container forms the bottom in the calm bay, whereby the influence of the waves on the oil layer is diminished and a pre-separation and gathering of the oil is made possible.

Preferably, the collar surrounds the container by at least 180° to form said calm bay. The collar can be made wave attenuating. The edge of the container is divided into segments which are separately, vertically adjustable. The upper surface of the container is funnel-shaped and includes the hole at the centre thereof for intake of said mixture. A plurality of containers can be combined to a vessel of a submersible or semi-submersible type, said vessel comprising a fore ship body, an aft ship body and a watertight bulwark, at at least one side of the vessel, which together form said calm bay. The vessel can include hinged bulwarks or hatches on both sides although only one bulwark is working at a time. The containers are arranged as conventional tanks in a hull and are filled as mentioned above and can, if required, be emptied into a tanker.

The plant is placed leeward an oil spill i.e. on the side towards which the slick drifts. Due to the container being of a semi-submersible type it remains in a relatively stationary position and the oil will drift towards the container. The collar corrals an amount of oil, which obtains a bigger thickness in the calm bay. The oil then pours down into the container of its own gravity. When the oil is not viscous enough the pouring can be accelerated by a feed-screw. In the lower part of the container the surplus water is discharged. When the container is filled to a certain extent the oil is heated to a suitable viscosity to separate and settle and be pumped over to a tanker. The container can be made self manoeuvred and possibly remote controlled.

Two embodiments of the present invention will be described below with reference to the drawing to illustrate the invention.

Fig. 1 is a cross-section in perspective of a container according to the invention.

Fig. 2 is a side view partially in section taken along the line II—II in Fig. 3 of a semi-submersible vessel according to the invention.

Fig. 3 is a plan view of the vessel according to Fig. 2.

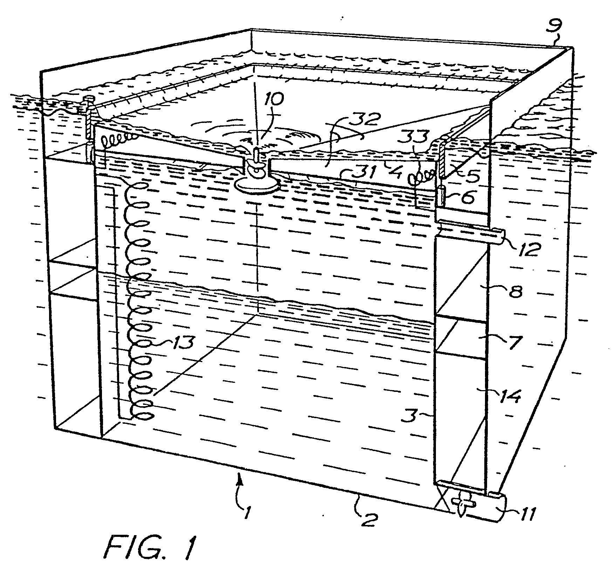

Figure 1 shows a container according to the invention. The container comprises a closed casing 1 having a lower surface 2, side walls 3, and an upper, partially funnel-shaped surface 4. The funnel-shaped surface is limited sideways by an adjustable edge 5 which can be set vertically by pneumatic or hydraulic pistons 6. The casing is surrounded by ballast tanks 14, trim tanks 7 and compensation tanks 8 for controlling the draught and tilt of the container. The casing is surrounded by an outer collar 9 which encircles the adjustable edge at a certain distance therefrom. The outer collar 9 encompasses the container at almost three sides leaving the fourth side open as an inlet for oil and water. The gathered oil flows over the adjustable edge and down onto the funnel-shaped collecting table 4 and to its centre. In the centre of the table there is a hole 10 through which oil and water can pour down into the container beneath. The container is mainly filled with water. When oil and water flow down into the container surplus water is discharged at the same time through a lower pipe 11 to keep the liquid at a constant level. In the container the oil is separated from the water and then pumped out through a pipe connection 12 to an accompanying tanker or another tank. The container is also equipped with a heating coil 13 in order to lower the viscosity and enable pumping of the oil. The outlet 12 and inlet 10 can be arranged with pumps and non-return valves to guide the flow into and out from the container. The outlet 11 has a level indicator and a shut-off valve to control the quantity of liquid in the container. Beneath the upper surface 4 of the container there is an essentially horizontal partition 31, which together with said upper surface forms a tank 32 filled with a fluid. The tank includes a heating device 33 for heating the fluid and the upper surface 4 optionally to a higher temperature than the remaining content of the container. Thereby the viscosity of the oil on the funnel-shaped surface 4 is lowered and the flowing of the oil through said hole 10 facilitated. The heating devices 13 and 33 can be activated at different times at demand.

The function of the container 1 is evident from the above and requires no further explanation.

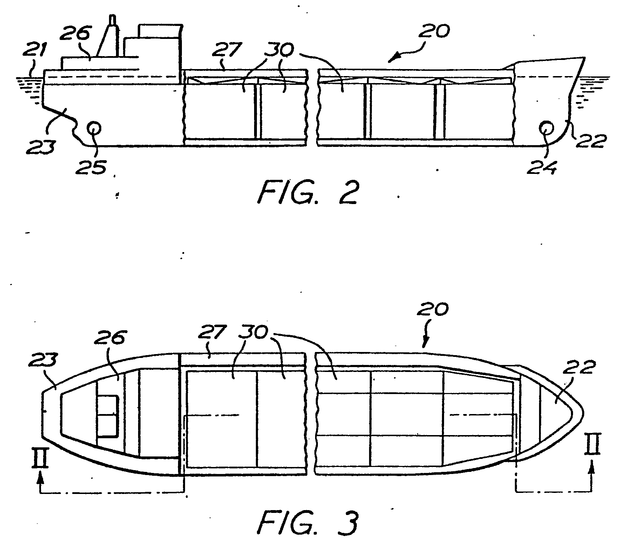

Figures 2 and 3 show a plurality of these containers combined in a semi-submersible vessel 20. The water surface 21 almost completely covers the deck of the vessel 20. The vessel 20 is equipped with a fore ship body 22 and an aft ship body 23. These bodies harbour power and manoeuvring devices 24 and 25, to hold the vessel transversely to the wind direction. The vessel comprises a power producing unit 26 which delivers power to the heating devices of the containers 30 and the manoeuvring devices 24, 25. Furthermore the vessel has conventional equipment like engine, rudder, screw etc.

The vessel is equipped with vertical hatches forming a hinged and tight bulwark. The hatches 27, the fore ship body 22, the aft ship body 23 and the containers 30 form together a so called calm bay where oil can be gathered. The vessel can also be completed with conventional booms in moderate weather to widen the gathering capacity.

The vessel 20 is placed leeward an oil slick. Owing to its draught the vessel stays in a stationary position in relation to the slick which drifts towards the vessel and gathers in the calm bay. Since the oil is floating on the surface the thickness of the oil layer in the calm bay will increase. The gathered oil then pours down into the containers beneath 30 as described with reference to Fig. 1. When all containers only contain oil, the vessel is shipped to any convenient plant for utilization of the oil recovered. The vessel can also be discharged to an accompanying oil tanker.

The collected oil can be reused thus saving millions of pounds. The characteristic of the invention is that the container forms a calm bay and is immersed and so arranged that the oil is gathered on top of the container by its own gravity.

The invention is not limited by the above described embodiments, by only by the patent claims below.

## Claims

1. A method for recovering oil spilled on water, comprising the steps of floating a closed container (1) of a submersible or semi-submersible type comprising an upper surface (4) surrounded by a height adjustable edge (5) with said edge positioned adjacent to the boundary between oil and water; causing a mixture of oil and water floating 'er said edge to flow through at least one ho 0) in the upper surface of the container to .e interior of the container located below the water surface; allowing the mixture to settle i.e. separating the oil from the water in the container below the surrounding water surface and discharging the separated water to the surroundings; characterized in forming a calm bay above and in the vicinity of or around the container by means of said upper surface and a rigid collar (9) attached to and partially surrounding the container, said collar extending above the water surface.

2. A method as claimed in claim 1, characterized in discharging the separated oil to a tanker or similar.

3. A method as claimed in claim 1, characterized in heating the mixture in the container and heating the upper surface (4) in order to lower the viscosity of the oil.

4. A method as claimed in claim 1, characterized in adjusting the depth and inclination of the container by means of trim tanks (7) and compensation tanks (8) so as to tilt the container against the waves of the sea and adjusting the height of the edge (5) in relation to the container.

5. A plant for recovering oil spilled on water, comprising a closed container (1) having an upper surface (4) and a lower surface (2) and side walls (3), the container being immersed in the sea and having enclosed a mixture of oil and water and a certain amount of air, the container comprising ballast tanks (14), compensation tanks (8) and trim tanks (7) and a control equipment for adjusting the depth and inclination of the container in the water, and means (6) for positioning a height adjustable edge (5) of the container adjacent to the boundary between the oil and the water; the upper surface (4) of the container including at least one hole (10) enabling a mixture of oil and water floating over said edge to enter and settle in the interior of the container below the surrounding water surface; an outlet (11) of the container being adapted to discharge the separated water to the surroundings; characterized by the fact that the container comprises a rigid collar (9) extending above the water surface on the outside and at a distance from said edge (5) in order to partially encircle an area of the water surface and to form a calm bay together with the upper surface of the container.

6. A plant as claimed in claim 5, characterized by an outlet (12) for discharging the separated oil to an oil tanker or similar.

7. A plant as claimed in claim 5, characterized in that the container comprises one or several heating devices (13, 33) in order to heat the mixture in the container and the upper surface.

8. A plant as claimed in claim 5, characterized in that the collar (9) surrounds the container by at least 180°; and that the edge (5) is divided into segments which are separately vertically height adjustable.

9. A plant as claimed in claim 5, characterized in that the upper surface (4) of the container is funnel-shaped and includes said hole (10) at the centre thereof for intake of said mixture, the flow through said hole being controlled by a valve and pump means.

10. A plant as claimed in claim 5, characterized in that a plurality of containers (30) are combined to a vessel (20) of a submersible or semi-submersible type, said vessel comprising a fore ship body (22) and an aft ship body (23); of which the bulwark (27), the fore ship body (22) and the aft ship body (23) together with the upper surfaces of the containers (30) form said calm body.

**Patentansprüche**

1. Verfahren zum Rückgewinnen von Öl, das auf das Wasser vergossen ist, umfassend die Verfahrenschritte, dass ein geschlossener Behälter (1), der mit einer oberen Aussenwand (4) versehen ist, die mit einer in der Höhe verstellbaren Kante (5) umgegebenen ist, unterseeisch oder halbunterseeisch fliessen wird mit der genannten Kante angrenzend an die Grenzschicht zwischen Öl und Wasser eingestellt; dass eine Mischung von Öl und Wasser, welche die genannte Kante überfliesst, durch mindestens ein Loch (10) in der oberen Aussenwand des Behälters fliessen wird, um in den Innenraum des Behälters, der sich unter der Wasseroberfläche befindet, hereinzufliessen; dass die Mischung abgesetzt wird, d.h. dass das Öl vom Wasser im Behälter unter dem umgebenden Wasseroberfläche getrennt und das getrennte Wasser ins umgebende Wasser hinausgelassen wird; dadurch gekennzeichnet, dass eine ruhige Bucht über und in der Nähe von dem Behälter oder rund den Behälter herum geformt wird mit Hilfe der genannten oberen Aussenwand und eines an dem Behälter festgemachten und den Behälter teilweise umgebenden festen Randes (9), der sich über die Wasseroberfläche erhöht.

2. Verfahren gemäss Anspruch 1, dadurch gekennzeichnet, dass das getrennte Öl in ein Tankschiff oder dergleichen hinausgelassen wird.

3. Verfahren gemäss Anspruch 1, dadurch gekennzeichnet, dass die Mischung im Behälter sowie die obere Aussenwand beheizt werden, um die Viskosität des Öls zu reduzieren.

4. Verfahren gemäss Anspruch 1, dadurch gekennzeichnet, dass die Tiefe und die Inklination des Behälters mit Hilfe von Trimmtanks (7) und Ausgleichstanks (8) angepasst werden, um den Behälter gegen die Wellen zu kippen, und dass die Höhe der Kante (5) im Verhältnis zu dem Behälter angepasst wird.

5. Anlage zum Rückgewinnen von Öl, das auf das Wasser vergossen ist, umfassend einen geschlossenen ins Meer getäuchten und eine Mischung von Öl und Wasser sowie eine gewisse Menge Luft einschliessenden Behälter (1) mit einer oberen Aussenwand (4) und einer unteren Aussenwand (2) sowie Seitenwänden (3); und umfassend Ballasttanks (14), Ausgleichstanks (8) und Trimmtanks (7) und eine Regelvorrichtung zur Anpassung der Tiefe und der Inklination des Behälters im Wasser; und umfassend Mittel (6) zur Einstellung einer in der Höhe verstellbaren Kante (5) des Behälters angrenzend an die Grenzschicht zwischen Öl und Wasser; wobei die obere Aussenwand (4) des Behälters mindestens ein Loch (10) enthält, damit eine Mischung von Öl und Wasser, welche die genannte Kante überfliesst, in den Innenraum des Behälters, der sich unter der Wasseroberfläche befindet, hereinfliessen und absetzen kann; eine Ablassöffnung (11) des Behälters zum Hinauslassen des getrennten Wassers ins umgebende Wasser, dadurch gekennzeichnet, dass der Behälter einen festen Rand umfasst, der sich über die Wasseroberfläche auf der Aussenseite in einiger Entfernung von der genannten Kante (5) erhöht, um eine Wasseroberfläche teilweise einzukreisen, und damit eine ruhige Bucht zusammen mit der oberen Aussenwand des Behälters zu bilden.

6. Anlarge gemäss Anspruch 5, gekennzeichnet durch einer Ablassöffnung (12) zum auslassen des getrennten Öls in ein Öltankschiff oder dergleichen.

7. Anlarge gemäss Anspruch 5, dadurch gekennzeichnet, dass der Behälter eine oder mehrere Heizungsvorrichtungen (13, 33) umfasst, um die Mischung im Behälter und die obere Aussenwand zu beheizen.

8. Anlage gemäss Anspruch 5, dadurch gekennzeichnet, dass der Rand (9) den Behälter mit mindestens 180° umgibt, und dass die Kante (5) in Abschnitten eingeteilt ist, die einzeln in der Höhe verstellbar sind.

9. Anlage gemäss Anspruch 5, dadurch gekennzeichnet, dass die obere Aussenwand (4) des Behälters trichterförmig ist und das genannte Loch (10) in der Mitte zum Einlassen der genannten Mischung umfasst, wobei das Fliessen durch das genannte Loch von einem Ventil und einer Pumpe kontrolliert wird.

10. Anlage gemäss Anspruch 5, dadurch gekennzeichnet, dass mehrere Behälter (30) zu einem unterseeischen oder halbunterseeischen Schiff zusammengesetzt sind, das aus einem Vorderschiffkörper (22) und einem Hinterschiffkörper (23) besteht, somit dass die Reling (27), der Vorderschiffkörper (22) und der Hinterschiffkörper (23) zusammen mit der oberen Aussenwand des Behälters (30) die genannte ruhige Bucht bilden.

## Revendications

1. Procédé de récupération d'hydrocarbure répandu sur l'eau, qui consiste à faire flotter une capacité fermée (1) de type submersible ou semi-submersible comportant une surface supérieure (4) entourée d'un bord (5) réglable en hauteur et situé près de la limite entre l'hydrocarbure et l'eau, à provoquer l'écoulement d'un mélange d'hydrocarbure et d'eau au-dessus de ce bord et à travers au moins un orifice (10) percé dans la surface supérieure de la capacité, vers la partie intérieure de la capacité située au-dessous de la surface de l'eau; à permettre la décantation de ce mélange, c'est-à-dire la séparation de l'hydrocarbure et de l'eau dans la capacité, au-dessous de la surface de l'eau extérieure, et le rejet de l'eau séparée vers le milieu extérieur, caractérisé en ce qu'il comporte la formation d'une zone calme en forme de baie au-dessus et au voisinage ou autour de la capacité, au moyen de ladite surface supérieure et d'un collier rigide (9) fixé à la capacité et l'entourant partiellement, ce collier dépassant au-dessus de la surface de l'eau.

2. Procédé suivant la revendication 1, caractérisé en ce que l'hydrocarbure séparé est évacué vers un bateau-citerne ou analogue.

3. Procédé suivant la revendication 1 ou 2, caractérisé en ce qu'il comporte le chauffage du mélange dans la capacité et le chauffage de la surface supérieure (4), de manière à diminuer la viscosité de l'hydrocarbure.

4. Procédé suivant l'une quelconque des revendications 1 à 3, caractérisé en ce qu'il comporte le réglage de la profondeur et de l'inclinaison de la capacité au moyen de cuves d'équilibrage (7) et de cuves de compensation (8), de manière à incliner la capacité en opposition aux vagues, et le réglage de la hauteur du bord (5) par rapport à la capacité.

5. Dispositif de récupération d'hydrocarbure répandu sur l'eau, comprenant une capacité fermée (1) qui comporte une surface supérieure (4), une surface inférieure (2) et des parois latérales (3), la capacité étant immergée dans la mer et contenant un mélange d'hydrocarbure et d'eau et une certaine quantité d'air, la capacité comprenant des cuves de ballast (14), des cuves de compensation (8) et des cuves d'équilibrage (7) et un équipement de commande pour le réglage de la profondeur et de l'inclinaison de la capacité dans l'eau, et des moyens (6) pour amener un bord réglable en hauteur (5) de la capacité à une position voisine de la limite entre l'hydrocarbure et l'eau, la surface supérieure (4) de la capacité comportant au moins un orifice (10) qui permet au mélange d'hydrocarbure et d'eau s'écoulant au-dessus du bord (5) de pénétrer et de décanter à l'intérieur de la capacité au-dessous de la surface de l'eau extérieure, une sortie (11) de la capacité permettant de rejeter l'eau séparée dans le milieu extérieur; caractérisé en ce que la capacité comporte un collier rigide (9) qui dépasse au-dessus de la surface de l'eau, à l'extérieur et à une certaine distance du bord (5), de manière à encercler partiellement une zone de la surface de l'eau et à former une baie calme, en association avec la surface supérieure de la capacité.

6. Dispositif suivant la revendication 5, caractérisé en ce qu'il comporte une sortie (12) pour évacuer l'hydrocarbure séparé vers un bateau-citerne ou un équipement analogue.

7. Dispositif suivant la revendication 5 ou 6, caractérisé en ce que la capacité est munie d'un ou plusieurs dispositifs de chauffage (13, 33), afin de chauffer le mélange dans la capacité ainsi que la surface supérieure.

8. Dispositif suivant l'une quelconque des revendications 5 à 7, caractérisé en ce que le collier (9) entoure la capacité sur au moins 180° et en ce que le bord (5) est divisé en éléments qui sont réglables verticalement en hauteur, séparément.

9. Dispositif suivant l'une quelconque des revendications 5 à 8, caractérisé en ce que la surface supérieure (4) de la capacité est en forme d'entonnoir et comporte en son centre l'orifice (10) pour l'entrée du mélange, l'écoulement à travers cet orifice étant réglé au moyen d'une vanne et d'une pompe.

10. Dispositif suivant l'une quelconque des revendications 5 à 9, caractérisé en ce qu'une pluralité de cuves (30) sont combinées en un bateau (20) de type submersible ou semi-submersible, ce bateau comprenant une proue (22) et une poupe (23), le bastingage (27), la proue (22) et la poupe (23) formant, avec les surfaces supérieures des capacités (30), ladite zone calme en forme de baie.

FIG. 1

FIG. 2

FIG. 3